# EUROPÄISCHE PATENTANMELDUNG

(11) **EP 0 976 696 A1**
(43) Veröffentlichungstag der Anmeldung: **02.02.2000**
(21) Anmeldenummer: 99114592.1
(22) Anmeldetag: 26.07.1999
(51) Int. Cl.: C04B 22/14

(54) **Betonverflüssiger**

(30) Priorität: 25.07.1998 DE 19833602
(71) Anmelder: Economic Versicherungs-Vermittlung GmbH, 40880 Ratingen (DE)
(72) Erfinder: Schrewe, Franz, 33154 Salzkotten (DE); Krell, Jürgen, Dr., 40723 Hilden (DE)
(74) Vertreter: Becker, Thomas, Dr., Dipl.-Ing.

(57) **Zusammenfassung**

Die Erfindung betrifft einen Betonverflüssiger, bestehend aus Zinn(II)sulfat sowie dessen Verwendung.

## Beschreibung

Die Erfindung betrifft einen Betonverflüssiger.

Betonverflüssiger zählen neben Fließmitteln, Luftporenbildnern, Dichtungsmitteln etc. zur Gruppe der Betonzusatzmittel, wie sie in den Richtlinien für die Erteilung von Zulassungen für Betonzusatzmittel (Fassung Dezember 1996) des Deutsches Institut für Bautechnik beschrieben sind.

Betonzusatzmittel sind Zusätze zum Beton, die durch chemische und/oder physikalische Wirkung die Betoneigenschaften beeinflussen. Sie werden in relativ geringen Mengen bis etwa 50 g je kg hydraulisch aktive Betonbestandteile (insbesondere Zement) zugegeben, und zwar pulverförmig, als Granulat oder flüssig.

Betonverflüssiger vermindern den Wasseranspruch des Betons (Zementes) und/oder die Verbesserung seiner Verarbeitbarkeit.

Entsprechend sollen Betonverflüssiger den für eine bestimmte Konsistenz oder Verarbeitbarkeit erforderlichen Wassergehalt des Betons verringern oder die Verarbeitbarkeit des Frischbetons verbessern. Die dadurch mögliche Wassereinsparung ist abhängig vom Zusatzmittel und von der Betonzusammensetzung. Betonverflüssiger können teilweise auch verzögernd auf die Hydratation wirken. Ebenfalls ist bekannt, daß einige Betonverflüssiger, beispielsweise Tenside, auch als Luftporenbildner wirken. Hierdurch kann der Frostbeziehungsweise Frost-Tausalz-Widerstand verbessert werden. Umgekehrt wirken auch Verzögerer teilweise verflüssigend auf die Frischbeton-Konsistenz.

Typische Betonverflüssiger sind neben den genannten Tensiden beispielsweise Ligninverbindungen (zum Beispiel Calciumlignosulfonat).

Die Auswahl eines geeigneten Betonverflüssigers erfolgt insoweit unter dem Gesichtspunkt einer Optimierung folgender Kriterien, in Abhängigkeit vom jeweiligen Anwendungsfall:

Verbesserung der Fließeigenschaften des Frischbetons, Verzögerung des Abbindeverhaltens der hydraulisch wirksamen Bestandteile des Betons, Erzielung einer ausreichenden Früh- und/oder Endfestigkeit des Betons, Kosten für den Betonverflüssiger, chemische und/oder physikalische Wirkung auf den Frischbeton.

Unter Berücksichtigung vorgenannter Prämissen liegt der Erfindung die Aufgabe zugrunde, einen neuartigen Betonverflüssiger anzubieten.

Überraschend wurde nun festgestellt, daß Zinn(II)sulfat einen wirksamen Betonverflüssiger darstellt.

Zinn(II)sulfat (SnSO₄) besteht aus weißen bis gelblichen Kristallen, die in verdünnter Schwefelsäure löslich sind. Die wässrige Lösung scheidet beim Stehen basisches Sulfat ab. Die Löslichkeit im Wasser sinkt mit steigender Temperatur. Erst ab etwa 360°C tritt eine Zersetzung von Zinn(II)sulfat auf.

Zinn(II)sulfat wurde bisher zur galvanischen Verzinnung oder zur elektrolytischen Metallsalz-Einfärbung von Aluminium verwendet. Insofern muß die Eignung von Zinn(II)sulfat als Betonverflüssiger überraschen.

Zinn(II)sulfat beeinträchtigt weder den Beton noch den Korrosionsschutz einer Bewehrung nachteilig und enthält auch keine Nebensubstanzen, die zu einer Beeinträchtigung des Betons oder des Korrosionsschutzes der Bewehrung führen könnten. Insoweit erfüllt es die Voraussetzungen der eingangs genannten 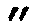 Richtlinien für die Erteilung von Zulassungen für Betonzusatzmittel".

Aufgrund seiner Beständigkeit in dem für Beton maßgeblichen Temperaturintervall zwischen minus 5 und plus 50°C erweist sich Zinn(II)sulfat als durchgehend stabil und wirksam. Es kann in Lösung, insbesondere in wässriger Lösung, dem Beton zugegeben werden. Die Dosierung ist einfach und analog der bekannter Betonverflüssiger.

Das Abbindeverhalten der hydraulischen Betonkomponenten wird nicht negativ beeinflußt. Gleiches gilt für die Betonfestigkeit.

Üblicherweise wird der erfindungsgemäße Betonverflüssiger in einer Menge von 0,1 bis 1,5 Gew.-%, bezogen auf die hydraulisch wirksamen Bestandteile des Betons, eingesetzt. Je nach Anwendungsfall wird eine Zugabemenge von 0,1 bis 0,8 Gew.-% ausreichend sein.

Im übrigen erfüllt Zinn(II)sulfat die in den genannten Zulassungsrichtlinien genannten Anforderungen an Betonverflüssiger.

Da Zinn(II)sulfat in wässriger Lösung nicht oxidiert nimmt es keinen Luftsauerstoff auf und erweist sich insoweit als besonders lagerstabil.

## Patentansprüche

1. Betonverflüssiger, bestehend aus Zinn(II)sulfat.

2. Betonverflüssiger nach Anspruch 1, wobei das Zinn(II)sulfat in Lösung vorliegt.

3. Betonverflüssiger nach Anspruch 2, wobei das Zinn(II)sulfat in wässriger Lösung vorliegt.

4. Verwendung des Betonverflüssigers nach einem der Ansprüche 1 bis 3 in einer Wirkstoffmenge von 0,1 bis 1,5 Gew.-%, bezogen auf die hydraulisch aktiven Betonbestandteile.
